# EUROPÄISCHE PATENTSCHRIFT

(11) **EP 2 198 255 B1**
(45) Veröffentlichungstag und Bekanntmachung des Hinweises auf die Patenterteilung: **05.08.2015**
(21) Anmeldenummer: 08785609.2
(22) Anmeldetag: 18.08.2008
(51) Int. Cl.: G01L 5/22, G01L 3/10

(54) **SENSORHALTERUNG UND VERFAHREN ZUR BEFESTIGUNG EINER DREHMOMENT- ODER DREHWINKELSANORDNUNG**
SENSOR MOUNTING AND METHOD FOR FASTENING A TORQUE OR ROTATIONAL ANGLE ARRANGEMENT
PORTE-DÉTECTEUR ET PROCÉDÉ DE FIXATION D'UN SYSTÈME DE DÉTECTEUR DE COUPLE DE ROTATION OU D'ANGLE DE ROTATION

(30) Priorität: 20.10.2007 EP 07050209
(43) Veröffentlichungstag der Anmeldung: 23.06.2010
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); THOM, Jens, 71034 Boeblingen (DE); JEREMS, Frank, 74369 Löchgau (DE)
(74) Vertreter: Pothmann, Karsten
(86) Internationale Anmeldenummer: PCT/EP2008/006785
(87) Internationale Veröffentlichungsnummer: WO 2009/049708

(56) Entgegenhaltungen:
- JP-A- 2007 082 342
- US-A- 5 113 104
- US-A- 5 394 760
- US-A- 5 536 985

## Beschreibung

### Stand der Technik

Die Erfindung betrifft ein Verfahren zur Befestigung einer Sensorhalterung an einer Welle für eine Drehmoment- oder Drehwinkelsensoranordnungen, insbesondere zur Detektion von drehwinkel- oder drehmomentabhängigen Größen an der Welle oder zwischen Teilwellen.

Es ist an sich bekannt, dass solche Sensorhalterungen fest an der Welle oder den Teilwellen befestigt werden müssen, um zusammen mit elektrischen, magnetischen, optischen oder anderen Sensormitteln, die mit der Halterung in einem Funktionszusammenhang stehen, absolute oder relative Drehbewegungen der Welle oder der Teilwellen dauerhaft und sicher zu erfassen.

Beispielsweise ist aus der DE 102 40 049 A1 bekannt, dass ein Drehmomentsensor zur Erfassung des an einer Welle anstehenden Drehmoments, insbesondere an Lenkwellen in einem Kraftfahrzeug, jeweils an zwei sich gegenüberliegenden Teilwellen der Welle angebracht ist. Auf der ersten Teilwelle ist hier eine drehfest angebrachte Hülse mit Magneten vorhanden und auf der anderen Teilwelle ist ein Magnetfeldsensor der Sensoranordnung angebracht, der dem Magneten an der ersten Teilwelle über einen Zwischenraum gegenüberliegt.

Bei dieser bekannten Anordnung hängt der im Zwischenraum erzeugte magnetische Fluss von der Drehwinkellage zischen dem Magneten und dem Detektor der Sensoranordnung ab, wobei zwischen den Teilwellen der Welle ein Torsionselement angeordnet ist, so dass hieraus das auf die Welle einwirkende Drehmoment messbar ist.

Ein solcher Drehmomentsensor besteht außerdem in der Regel aus zwei Einheiten, nämlich einer dynamischen Einheit, welche sich mit der Lenkwelle bzw. dem Torsionssystem mitdreht und einer ortsfesten Einheit mit einer Elektronik, welche an dem umgebenden Getriebegehäuse fixiert ist. Die dynamische Einheit ist dabei über die zwei Teilwellen der Lenkwelle, wie zuvor beschrieben, verteilt befestigt und kann deshalb auch in eine Statorbaugruppe und beispielsweise in eine Magnetbaugruppe unterteilt werden. Die Statorbaugruppe besteht mindestens aus dem Statorhalter und zum Beispiel zwei Sensoren, wobei optional weitere Bauteile in die Statorbaugruppe integriert werden können.

Die Halterungen für die Statorbaugruppe und für die Magnetbaugruppe sollten dabei über einen vorgegebenen Temperaturbereich und über eine bestimmte Lebensdauer sicher und fest auf der Lenkwelle bzw. den Teilwellen befestigt werden. Bei der Montage wird die jeweilige Halterung auf die jeweilige Teilwelle der Lenkwelle geschoben und geht mit dieser eine feste mechanische Verbindung ein. Bei einer solchen Anordnung muss somit unabhängig von der Sensormethode gewährleistet sein, dass zum Beispiel die Halterung möglichst formschlüssig und dauerhaft drehfest angebracht ist, um Messfehler zu vermeiden.

Des Weiteren ist aus der US 5,394, 760 A ein gattungsgemäßes Verfahren zur Befestigung einer Sensorhalterung für eine Drehmomentsensoranordnung bekannt, bei welchem die Sensorhalterung mittels Hülsen aus Kunststoff an einer zugehörigen Welle befestigt wird.

### Darstellung der Erfindung

Die Erfindung geht von einem Befestungsverfahren wie im Anspruch 1 offenbart.

Die Welle ist dabei in vorteilhafter Weise Bestandteil beispielsweise eines Drehmomentsensors als Sensoranordnung, bei der zwei Teilwellen über ein Torsionselement miteinander verbunden sind. Die Drehmomentsensoranordnung besteht, wie für sich gesehen aus dem eingangs erläuterten Stand der Technik bekannt, aus einer Magnetbaugruppe auf einer ersten Hülse der Halterung an der ersten Teilwelle und aus einer Statorbaugruppe mit den Magnetfeldsensoren auf einer zweiten Hülse der Halterung an der zweiten Teilwelle, so dass das Drehmoment aus der relativen Verdrehung der beiden Teilwellen, die über einem Torsionsstab miteinander verbunden sind, ermittelbar ist.

Vorteilhaft kann ein solcher Drehmomentsensor vorzugsweise an der Lenkwelle in einem Kraftfahrzeug angebracht werden, wobei der Drehmomentsensor an zwei axial sich gegenüberliegenden Teilwellen der Lenkwelle befestigt ist und eine Drehwinkeländerung zwischen den Teilwellen erfasst.

Bevorzugt weisen die Teilwellen im Bereich der Anbringung der jeweiligen Hülsen eine Formschlussstruktur auf, die zum Beispiel aus einer Rändelstruktur in axialer Richtung der Welle besteht. Andererseits sind auch axiale oder radiale Nute oder vergleichbare geeignete Strukturen möglich, wobei sich dann eine entsprechende Gegengeometrie in den Hülsen wiederfinden kann. Der aufgeschmolzene Kunststoff fließt somit in die Strukturen der Formschlussgeometrie der Teilwellen und kühlt anschließend mit den Teilwellen ab, so dass zwischen den Teilwellen und den Hülsen der Formschluss entsteht, der von Alterungserscheinungen nur gering betroffen ist.

Die Hülse kann in ihren Innendurchmesser zylindrisch und glatt sein oder auch, falls ein gerichtetes Fügen erwünscht wird, eine unterbrochene Geometrie aufweisen. Der Innendurchmesser der Hülsen sollte jeweils geringer sein als der Außendurchmesser der Teilwellen im Bereich der Verbindung, damit es zwischen beiden Bauelementen nach dem Pressvorgang beim Aufschieben zu der kraftschlüssigen Verbindung kommen kann.

Nach dem erfindungsgemäßen Verfahren zur Befestigung der zuvor beschriebenen Halterung werden die Teilwellen, in der Regel aus Stahl, zumindest in den Wellenabschnitten oder Bereichen, die zur Aufnahme der Hülsen der Halterung dienen mit einer vorgegebenen Temperatur lokal aufgewärmt, was zum teilweisen Aufweichen des Kunststoffs der jeweiligen Hülse im weiteren Prozess führt. Die jeweilige Hülse wird dann in axialer Richtung aufgeschoben und nach einem Abkühlen des jeweiligen Wellenabschnitts bleibt die jeweilige Hülse formschlüssig auf dem jeweiligen Wellenabschnitt haften.

Die Erwärmung kann beispielsweise durch Induktionserwärmung, Flammerwärmung oder ähnliche Verfahren durchgeführt werden, wobei die zu wählende Temperatur abhängig ist vom verwendeten Kunststoffmaterial der Hülsen.

Vorteilhaft ist es hierbei insbesondere, wenn die beide Hülsen mit jeweils der Magnetbaugruppe und der Statorbaugruppe über eine Lagesicherung in der nachfolgenden Arbeitsstellung während der Montage zusammen auf die Bereiche der Teilwellen aufgeschoben werden und nach der Abkühlung die Lagesicherung entfernt wird. Somit kann die Montage der gesamten Drehmomentsensoranordnung zeitgleich erfolgen, wobei allerdings auch eine zeitversetzte Einzelmontage in verschiedenen Anwendungsfällen vorteilhaft sein kann. Abhängig von der Art der Montage kann die lokale Erwärmung nur an einer der beiden Teilwellen oder an beiden erfolgen.

Der vorgeschlagene Drehmomentsensor kann damit spielfrei und dauerhaft mit der Lenkwelle eines Kraftfahrzeugs verbunden werden, wobei die Verbindung durch einen kombinierten Kraft-und Formschluss erreicht wird. Der durch die Wärmeenergie der Teilwellen aufgeschmolzene Kunststoff der Hülsen kann sich insbesondere leicht an die auf der Lenkwelle vorhandene Formschlussgeometrie, zum Beispiel die Rändelstruktur, anpassen und mit dem Auskühlen der Teilwellen pressen sich die jeweiligen Hülsen auf die Welle auf und es wird gleichzeitig durch die Formschlussgeometrie der Welle ein Formschluss zwischen den Hülsen und der Welle erzeugt.

Bei dem Aufpressen auf die erwärmten Teilwellen wird der Kunststoff somit aufgeweicht und kann stärker gedehnt werden, so dass zwischen den Teillen und der Magnet- und der Statorbaugruppe auch eine kraftschlüssige Verbindung entsteht. Die Gefahr einer Rissbildung im Kunststoff der Hülsen unter der Magnet- und der Statorbaugruppe ist damit vermindert. Ein sonst üblicherweise notwendige Verstärkung der Hülsen, beispielsweise durch integrierte Metallhülsen kann somit entfallen, wodurch sich die Kosten reduzieren lassen.

### Kurze Beschreibung der Zeichnung

Ausführungsbeispiele der Erfindung werden anhand der Figuren der Zeichnung erläutert. Es zeigen:
Figur 1 ein Anwendungsbeispiel einer Halterung für einen Drehmomentsensor an der Lenkwelle eines Kraftfahrzeuges,
Figur 2 eine Detaildarstellung der Manget- und der Statorbaugruppe des Drehmomentsensors nach der Figur 1 vor dem Aufschieben auf Teilwellen der Lenkwelle und
Figur 3 eine Detaildarstellung der Detaildarstellung der Teilwellen der Lenkwelle nach der Figur 1 mit einer gerändelten Formschlussstruktur.

### Wege zur Ausführung der Erfindung

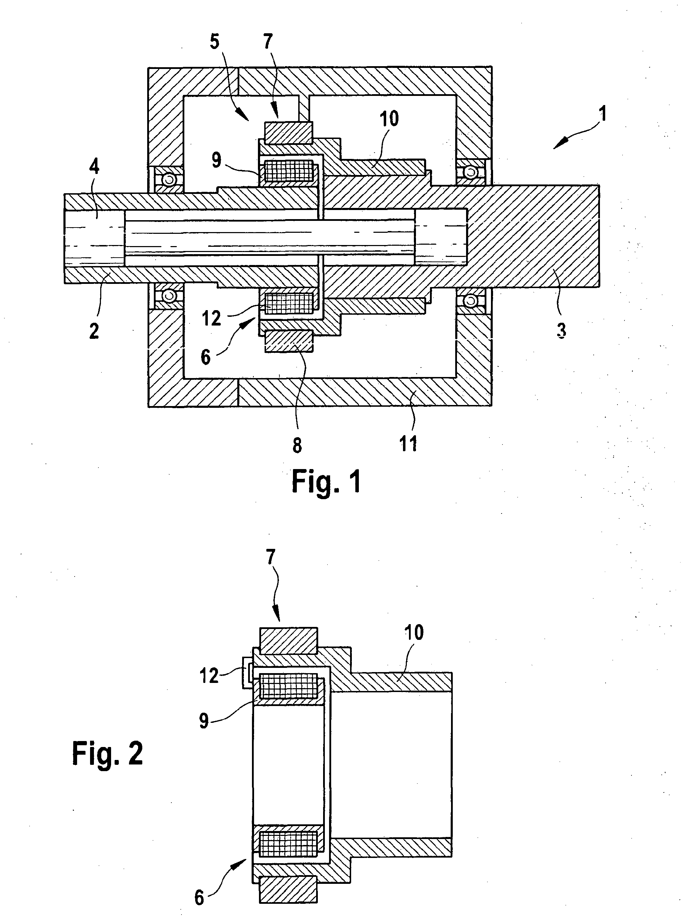

Figur 1 zeigt eine Vorrichtung zur Bestimmung eines auf eine Welle ausgeübten Drehmoments an einer Lenkwelle 1 eines Kraftfahrzeuges. Die Lenkwelle 1 weist hier zwei Teilwellen 2 und 3 auf, die mittels eines Torsionsstabes 4 miteinander verbunden sind. Es ist hier eine Drehmomentsensoranordnung 5 vorhanden, die aus einer hier einen nicht näher beschriebenen Magnetbaugruppe 6 an der Teilwelle 2 und einer Statorbaugruppe 7 an der Teilwelle 3 mit einem Magnetfeldsensor 8 zur Erfassung der drehwinkelabhängigen Magnetfeldänderungen besteht.

Umgeben ist die Anordnung von einem ortsfesten Gehäuse 11, dass an den Teilwellen 2 und 3 drehbar gelagert ist. Die Magnetbaugruppe 6 und die Statorbaugruppe 7 zur Erfassung des relativen Drehwinkels zwischen den Teilwellen 2 und 3 sind mittels Hülsen 9 und 10 als Bestandteile der Sensorhalterung an den Teilwellen 2 und 3 drehfest gehalten.

In Figur 2 ist eine Detaildarstellung der Mangetbaugruppe 6 und der Statorbaugruppe 7 der Drehmomentsensoranordnung 5 mit der jeweiligen Hülse 9 und 10 gezeigt. Hier sind die beiden Bauteile über eine Lagesicherung 12 zunächst miteinander gehalten, wenn sie auf die Teilwellen 2 und 3 aufgeschoben werden.

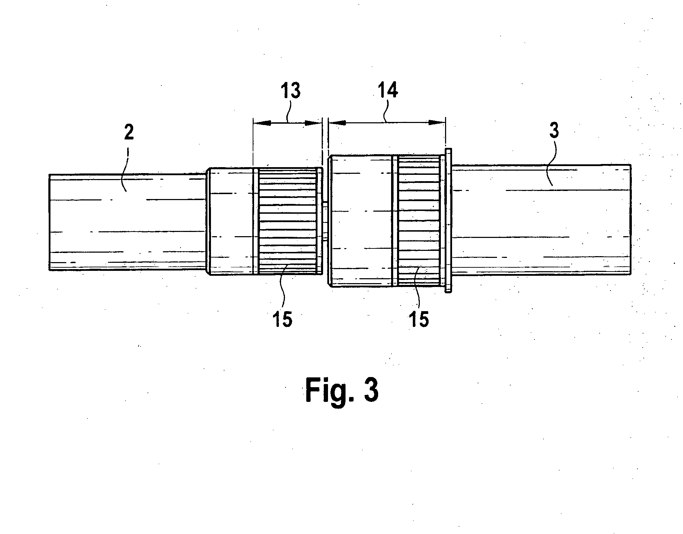

Aus Figur 3 sind ebenfalls in einer Detaildarstellung die Teilwellen 2 und 3 allein gezeigt, die Wellenabschnitte mit Bereichen 13 und 14 aufweisen, die gezielt und temporär einer Wärmebehandlung ausgesetzt werden. Weiterhin ist hier noch jeweils eine axiale Rändelstruktur 15 in den Bereichen 13 und 14 erkennbar.

Die beide Hülsen 9 und 10 werden dann mit jeweils der Magnetbaugruppe 6 und der Statorbaugruppe 7 über die Lagesicherung 12 in der Arbeitsstellung während der Montage zusammen auf die Bereiche 13 und 14 der Teilwellen 2 und 3 aufgeschoben und nach der Abkühlung der Teilwellen 12 und 3 wird die Lagesicherung 12 wieder entfernt.

## Patentansprüche

1. Verfahren zur Befestigung einer Sensorhalterung für eine Drehwinkel- oder Drehmomentsensoranordnung (5) mit Hülsen (9,10) aus Kunststoff zur Befestigung an einer Welle (1;2,3), **dadurch gekennzeichnet, dass** Teilwellen (2,3) in Bereichen (13,14), die zur Aufnahme der Hülsen (9,10) der Sensorhalterung dienen, mit einer vorgegebenen Temperatur temporär und lokal aufgewärmt werden, was zum teilweisen Aufweichen des Kunststoffs der jeweiligen Hülse (9,10) führt während die jeweilige Hülse (9,10) in axialer Richtung aufgeschoben wird und dass nach einem Abkühlen der jeweiligen Teilwellen (2,3) die jeweilige Hülse (9,10) form- und kraftschlüssig auf der jeweiligen Teilwelle (2,3) haften bleibt.

2. Verfahren nach Anspruch 1, **dadurch gekennzeichnet, dass** die Erwärmung durch Induktions- oder Flammenerwärmung erfolgt.

3. Verfahren nach Anspruche 1 oder 2, **dadurch gekennzeichnet, dass** die beiden Hülsen (9,10) mit jeweils der Magnetbaugruppe (7) oder der Statorbaugruppe (8) über eine Lagesicherung (12) in der Arbeitsstellung während der Montage zusammen auf die Teilwellen 2,3) aufgeschoben werden und dass nach der Abkühlung der Teilwellen (2,3) die Lagesicherung (12) entfernt wird.

4. Verfahren nach Anspruch 1, **dadurch gekennzeichnet, dass** sich der durch Wärmeenergie aufgeschmolzene Kunststoff der Hülsen (9, 10) an eine an den Teilwellen (2, 3) vorhandene Formschlussgeometrie anpasst.

## Claims

1. Method for fastening a sensor mounting for a rotational-angle or torque sensor arrangement (5) having sleeves (9, 10) made of plastic for fastening to a shaft (1; 2, 3), **characterized in that** part-shafts (2, 3) are temporarily and locally heated up to a predetermined temperature in regions (13, 14) that serve for receiving the sleeves (9, 10) of the sensor mounting, which leads to the partial softening of the plastic of the respective sleeve (9, 10) while the respective sleeve (9, 10) is pushed on in the axial direction and **in that**, after a cooling down of the respective part-shafts (2, 3), the respective sleeve (9, 10) remains bonded with a form fit and force fit on the respective part-shaft (2, 3).

2. Method according to Claim 1, **characterized in that** the heating is performed by induction heating or flame heating.

3. Method according to Claim 1 or 2, **characterized in that** the two sleeves (9, 10) are pushed onto the part-shafts (2, 3) together with the magnetic assembly (7) or the stator assembly (8), respectively, in the working position during assembly by using a positional securing means (12) and **in that** the positional securing means (12) is removed after the cooling down of the part-shafts (2, 3).

4. Method according to Claim 1, **characterized in that** the plastic of the sleeves (9, 10) that is melted by thermal energy is adapted to a form-fitting geometry on the part-shafts (2, 3).

## Revendications

1. Procédé de fixation d'une fixation de capteur pour un agencement de capteur d'angle de rotation ou de couple (5) comprenant des douilles (9, 10) en plastique pour la fixation à un arbre (1 ; 2, 3), **caractérisé en ce que** des arbres partiels (2, 3) dans des régions (13, 14) qui servent à recevoir les douilles (9, 10) de la fixation de capteur sont temporairement et localement chauffés à une température prédéfinie, ce qui entraîne un ramollissement partiel du plastique de la douille respective (9, 10) pendant que la douille respective (9, 10) est poussée dans la direction axiale et **en ce qu'**après un refroidissement des arbres partiels respectifs (2, 3) la douille respective (9, 10) reste en adhérence sur l'arbre partiel respectif (2, 3) par engagement par correspondance de formes et par force.

2. Procédé selon la revendication 1, **caractérisé en ce que** le chauffage s'effectue par chauffage par induction ou à la flamme.

3. Procédé selon la revendication 1 ou 2, **caractérisé en ce que** les deux douilles (9, 10) avec à chaque fois le module magnétique (7) ou le module statorique (8) sont poussées par le biais d'une fixation en position (12) dans la position de travail pendant le montage conjointement sur les arbres partiels (2, 3) et **en ce qu'**après le refroidissement des arbres partiels (2, 3) la fixation en position (12) est supprimée.

4. Procédé selon la revendication 1, **caractérisé en ce que** le plastique des douilles (9, 10), fondu sous l'effet de l'énergie thermique, s'adapte à une géométrie d'engagement par correspondance de formes existant sur les arbres partiels (2, 3).
